# EUROPEAN PATENT APPLICATION

(11) **EP 2 157 367 A1**
(43) Date of publication of application: **24.02.2010**
(21) Application number: 08703782.6
(22) Date of filing: 24.01.2008
(51) Int. Cl.: F21V 8/00, G02F 1/13357, F21Y 101/02

(54) **BACKLIGHT UNIT**

(30) Priority: 12.06.2007 JP 2007154964
(71) Applicant: Sharp Kabushiki Kaisha, Osaka-shi, Osaka 545-8522 (JP)
(72) Inventor: HAMADA, Tetsuya, OSAKA 545-8522 (JP)
(74) Representative: Müller-Boré & Partner Patentanwälte
(86) International application number: PCT/JP2008/050954
(87) International publication number: WO 2008/152825

(57) **Abstract**

A backlight unit that while attaining cost reduction, realizes inhibiting of a light quantity decrease in the vicinity of an end portion of light guide plate and achieving of an enhancement of light utilization efficiency. Backlight unit (10, 30, 40, 50) comprises light guide plate (3) provided inside frame (1, 41, 51) and, provided inside the frame, multiple light emitting diodes (4) disposed with given spacings between adjacent diodes so as to be opposite to light incident surface (3a) of the light guide plate. Further, in an area opposite to end portion (3g) of the light incident surface of the light guide plate, there is not disposed any light emitting diode but provided reflection surface (1f, 41g, 31a, 57a) capable of reflecting the light outgoing from the light emitting diodes toward the light incident surface of the light guide plate.

## Description

### Technical Field

The present invention relates to a backlight unit, and more particularly, to a backlight unit that includes a light guide plate.

### Background Art

Conventionally, a backlight unit that includes a light guide plate for guiding light generated by an LED (light emitting diode) in a predetermined direction is known (e.g., see a patent document 1).

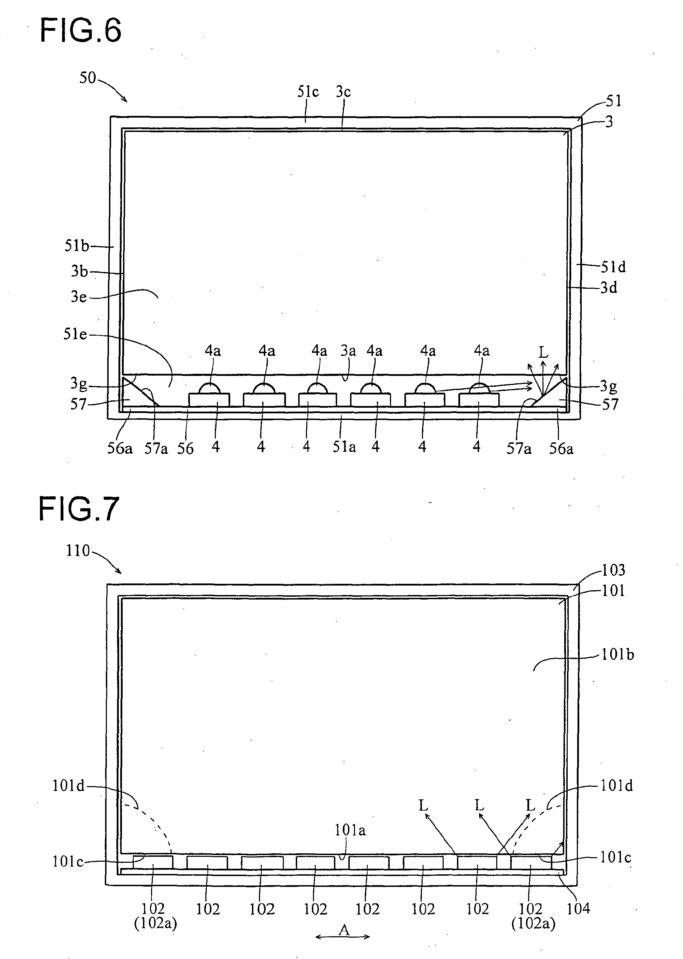

Fig. 7 is a plan view showing schematically an example of a conventional backlight unit. With reference to Fig. 7, in a conventional backlight init 110, a light guide plate 101, an LED (light emitting diode) 102 and the like are housed in the inside of a backlight frame 103.

The light guide plate 101 includes a side surface 101a (hereinafter, called a light incident surface 101a) that functions as a light incident surface and a front surface 101b (hereinafter, called a light emission surface 101b) that functions as a light emission surface and the like. Besides, a plurality of LEDs 102 are disposed in the inside of the backlight frame 103 and mounted on a predetermined board 104. And, the plurality of LEDs 102 are so arrayed away from each other by a predetermined distance in an A direction (a direction along the light incident surface 101a of the light guide plate 101) that each of them faces the light incident surface 101a of the light guide plate 101. In addition, although not shown, a reflection sheet is disposed on a rear surface side opposite to the light emission surface 101b side of the light guide plate 101 and an optical sheet is disposed on the light emission surface 101b side of the light guide plate 101. Here, arrows L in Fig. 7 indicate traveling directions of light in the vicinity of an end portion of the light guide plate 101.

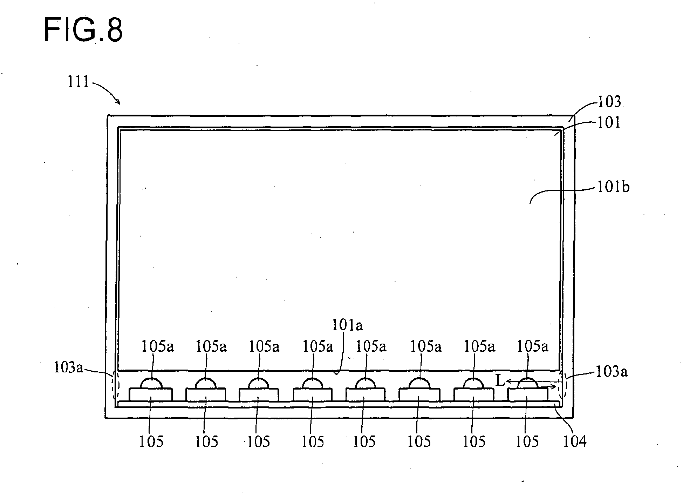

Besides, conventionally, as shown in Fig. 8, a backlight unit 111 that uses LED 105 which include a lens 105a instead of the LED 102 in the conventional structure shown in Fig. 7 is also known. Here, an arrow L in Fig. 8 indicate a traveling direction of light in the vicinity of an end portion of the light guide plate 101.

[patent document 1]: JP-A-2006-11242

### Disclosure of the Invention

### Problems to be Solved by the Invention

However, in the conventional backlight unit 110 shown in Fig. 7, if the LED 102 is not disposed in a region that faces an end portion 101c of the light incident surface 101a of the light guide plate 101, a disadvantage that a light amount in the vicinity of an end portion (a portion 101d enclosed by a broken line in Fig 7) of the light guide plate 101 drops occurs. Accordingly, if it is tried to reduce cost by omitting the LED 102 (102a) located at the outermost end in the conventional structure shown in Fig 7, there is a problem that the light amount in the vicinity of the end portion of the light guide plate 101 drops.

In addition, in the conventional backlight unit 111 that uses the LED 105 which includes the lens 105a shown in Fig. 8, it is necessary to enlarge a space between the light incident surface 101a of the light guide plate 101 and the LED 105 by a thickness of the lens 105a of the LED 105. Because of this, before light (LED light) emitted from the LED 105 enters the light incident surface 101a of the light guide plate 101, multiple reflection of LED light is repeated in the space between the light incident surface 101a of the light guide plate 101 and the LED 105, so that a disadvantage that the LED light is absorbed by a predetermined portion (a portion 103a enclosed by a broken line in Fig. 8) of the backlight frame 103 or by the LED 105 occurs. Consequently, there is a problem that light utilization efficiency drops.

The present invention has been made to deal with the conventional problems, and it is an object of the present invention to provide a backlight unit that while attains cost reduction, is capable of curbing decrease in light amount in the vicinity of an end portion of a light guide plate and improving light utilization efficiency.

### Means for Solving the Problem

To achieve the above object, a backlight unit according to one aspect of the present invention includes: a frame; a light guide plate which is disposed in an inside of the frame and a predetermined side surface of which serves as a light incident surface; and a plurality of light emitting diodes which are disposed in the inside of the frame and are so arrayed away from each other by a predetermined distance as to face the light incident surface of the light guide plate. And, in a region that faces an end portion of the light incident surface of the light guide plate, a light emitting diode is not disposed, and a reflection surface for reflecting light emitted from the light emitting diodes to the light incident surface of the light guide plate is formed.

In the backlight unit according to this one aspect, as described above, by forming the reflection surface for reflecting light (LED light) emitted from the light emitting diodes to the light incident surface of the light guide plate in the region that faces the end portion of the light incident surface of the light guide plate, it is possible to make the LED light that travels in a lateral direction (a direction along the light incident surface of the light guide plate) enter the end portion of the light incident surface of the light guide plate. Thus, even if a light emitting diode is not disposed in the region that faces the end portion of the light incident surface of the light guide plate, it is possible to curb decrease in the light amount in the vicinity of the end portion of the light guide plate. Accordingly, even if cost reduction is attained by reducing (eliminating the light emitting diode disposed in the region that faces the end portion of the light incident surface of the light guide plate) the number of utilized light emitting diodes, it becomes possible to curb decrease in the light amount in the vicinity of the end portion of the light guide plate.

Besides, because the above reflection surface is so structured as to reflect LED light to the light incident surface of the light guide plate, it is possible to prevent multiple reflection of LED light from being repeated in the space between the light incident surface of the light guide plate and the light emitting diode and to prevent the LED light from being absorbed by the frame and the light emitting diode before the LED light enters the light incident surface of the light guide plate. Accordingly, it is possible to improve the light utilization efficiency.

From these results, in the one aspect, while attaining cost reduction, it is possible to curb decrease in the light amount in the vicinity of the end portion of the light guide plate and improve the light utilization efficiency.

In the backlight unit according to the above one aspect, preferably, the reflection surface is inclined by a predetermined angle to the light incident surface of the light guide plate. According to such a structure, it is possible to easily reflect the LED light that travels in the lateral direction (the direction along the light incident surface of the light guide plate) to the light incident surface of the light guide plate.

In the backlight unit according to the above one aspect, preferably, the light emitting diode is not disposed in the region that faces the end portion of the light incident surface of the light guide plate but disposed in a region that faces a portion other than the end portion of the light incident surface of the light guide plate. According to such a structure, it is possible to easily form the reflection surface in the region that faces the end portion of the light incident surface of the light guide plate.

In the backlight unit according to the above one aspect, it is preferable that a distance from the center of the light emitting diode of the plurality of light emitting diodes located at the outermost end to a side surface perpendicular to the light incident surface of the light guide plate is larger than half of a pitch between adjacent light emitting diodes.

In the backlight unit according to the above one aspect, preferably, the reflection surface is formed in both of a region that faces one end portion of the light incident surface of the light guide plate and a region that faces the other end portion opposite to the one end portion of the light incident surface of the light guide plate. According to such a structure, for example, it is possible to further reduce the number of utilized light emitting diodes compared with a case where the reflection surface is formed in only the region that faces the one end portion of the light incident surface of the light guide plate.

In the backlight unit according to the above one aspect, preferably, a tapered surface which is inclined by a predetermined angle to the incident light surface of the light guide plate is unitarily formed on the frame, and the reflection surface is composed of the tapered surface unitarily formed on the frame. According to such a structure, even if the reflection surface is additionally formed, it is possible to curb increase in the number of components. In this case, it is preferable that the frame is formed of a white plastic.

In the backlight unit according to the above one aspect, preferably, the reflection surface is composed of a surface of a mirror member. According to such a structure, for example, it is possible to improve the light incident efficiency to the light incident surface of the light guide plate compared with a case where a surface of a plastic that performs diffusive reflection is used as the reflection surface.

In this case, preferably, a tapered surface which is inclined by a predetermined angle to the incident light surface of the light guide plate is formed in the region that faces the end portion of the light incident surface of the light guide plate, and the mirror member is disposed on the tapered surface. According to such a structure, it is possible to easily incline the surface (the reflection surface) of the mirror member by the predetermined angle to the light incident surface of the light guide plate.

In the backlight unit according to the above one aspect, the light emitting diode may be mounted on a board, and the reflection surface may be formed on the board.

In the backlight unit according to the above one aspect, preferably, the light emitting diode is a light emitting diode with a lens. According to such a structure, it is possible to make LED light travel in the lateral direction (the direction along the light incident surface of the light guide plate). Because of this, even if the light emitting diode is not disposed in the region that faces the end portion of the light incident surface of the light guide plate, it is possible to direct LED light to the region that faces the end portion of the light incident surface of the light guide plate. Thus, it becomes easy to obtain advantages of the present invention.

### Advantages of the Invention

As described above, according to the present invention, it is possible to easily obtain a backlight unit that while attains cost reduction, is capable of curbing decrease in light amount in the vicinity of an end portion of a light guide plate and improving light utilization efficiency.

### Brief Description of the Drawings

[Fig. 1] is an exploded perspective view showing a structure of a liquid crystal display apparatus that includes a backlight unit according to a first embodiment of the present invention.
[Fig. 2] is a sectional view of the backlight unit according to the first embodiment of the present invention sown in Fig. 1.
[Fig. 3] is a plan view seen from a front side of the backlight unit according to the first embodiment of the present invention shown in Fig. 1 (a view in which a reflection sheet and an optical sheet are omitted).
[Fig. 4] is a plan view seen from a front side of a backlight unit according to a second embodiment of the present invention (a view in which a reflection sheet and an optical sheet are omitted).
[Fig. 5] is a plan view seen from a front side of a backlight unit according to a third embodiment of the present invention (a view in which a reflection sheet and an optical sheet are omitted).
[Fig. 6] is a plan view seen from a front side of a backlight unit according to a fourth embodiment of the present invention (a view in which a reflection sheet and an optical sheet are omitted).
[Fig. 7] is a plan view showing schematically an example of a conventional backlight unit.
[Fig. 8] is a plan view showing schematically an example of a conventional backlight unit.

### List of Reference Symbols

- 1, 41, 51: backlight frames (frames)
- 1f, 41g, 57a: tapered surfaces (reflection surfaces)
- 3: light guide plate
- 3a: side surface (light incident surface)
- 3g: end portion
- 4: LED (light emitting diode)
- 4a: lens
- 10, 30, 40, 50: backlight units
- 31: mirror member
- 31a: surface (reflection surface)
- 56: LED board (board)

### Best Mode for Carrying Out the Invention

### (First Embodiment)

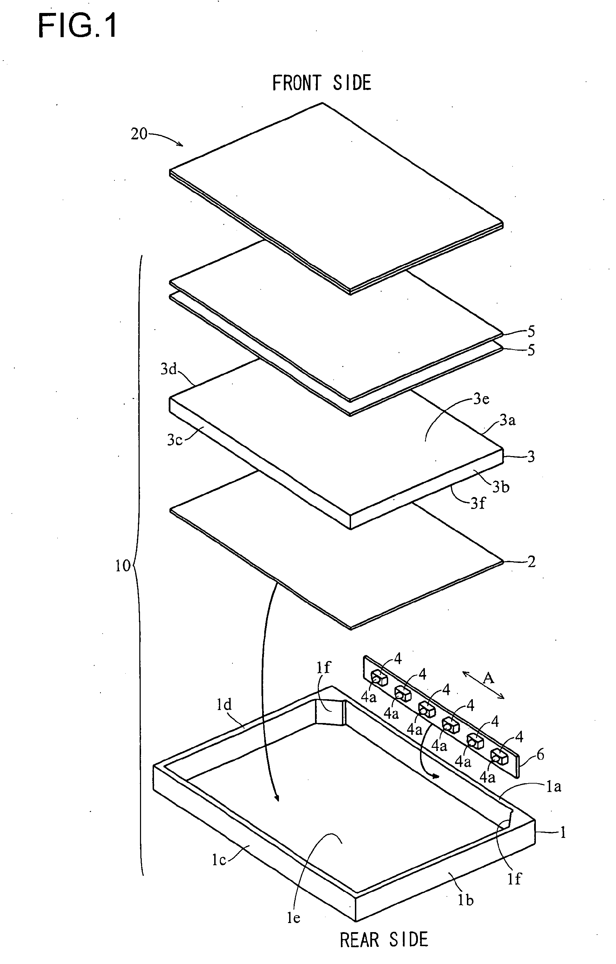

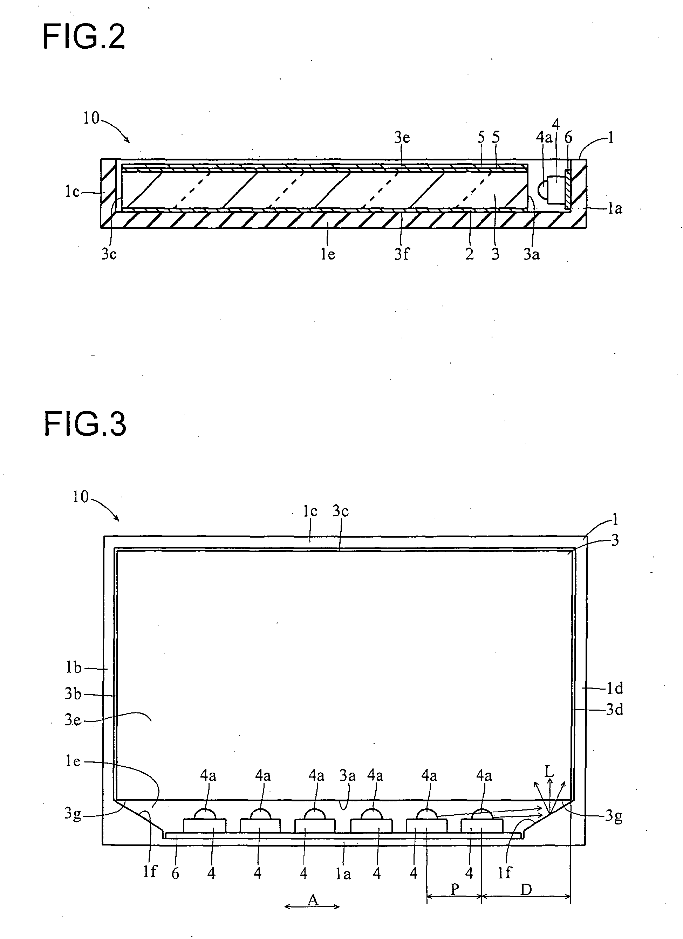

First, a backlight unit according to a first embodiment and a structure of a liquid crystal display apparatus that includes the backlight unit are described with reference to Figs. 1 to 3. Here, arrows L in Fig. 3 indicate travel directions of light in the vicinity of an end portion of a light guide plate.

A liquid crystal display apparatus that includes a backlight unit 10 in the first embodiment is, as shown in Fig. 1, used with the backlight unit 10 disposed on a rear side of a liquid crystal display panel 20. And, the backlight unit 10 in the first embodiment is so structured as to direct surface-shape light from behind the liquid crystal display panel 20 to the liquid crystal display panel 20. Hereinafter, a structure of the backlight init 10 in the first embodiment is described in detail.

The backlight unit 10 in the first embodiment, as shown in Figs. 1 and 2, includes at least: a backlight frame 1; a reflection sheet 2; a light guide plate 3; a plurality of LEDs (light emitting diode) 4 each with a lens 4a; and a plurality of optical sheets 5. Here, the backlight frame 1 is an example of a "frame" in the present invention.

The backlight frame 1 is formed of a white plastic or the like, and includes four side portions 1a to 1d which are connected to each other into a frame shape and a bottom portion 1e which is disposed on a rear side of the frame composed of the four side portions 1a to 1d. And, the above members (the reflection sheet 2, the light guide plate 3, the LED 4 and the optical sheet 5) which constitute the above backlight unit 10 are held in a region (a housing region) enclosed by the four side portions 1a to 1d of the backlight frame 1. Specifically, the reflection sheet 2, the light guide plate 3 and the optical sheet 5 are, in this order, subsequently placed on the bottom portion 1e of the backlight case 1. Besides, the LED 4 is mounted on the side portion 1a of the backlight case 1.

The reflection sheet 2 is composed of a resin sheet member and the like capable of reflecting light and is so disposed as to cover a rear surface 3f described later of the light guide plate 3. By disposing such reflection sheet 2, even if light is emitted from the rear surface 3f of the light guide plate 3 toward a backward side, the light is reflected by the reflection sheet 2; accordingly, it becomes possible to reintroduce the light emitted from the rear surface 3f of the light guide plate 3 toward the backward side into the light guide plate 3.

The light guide plate 3 is composed of a transparent member formed of a transparent resin or the like and includes at least four side surfaces 3a to 3d. In a state where the light guide plate 3 is housed in the inside of the backlight frame 1, the four side surfaces 3a to 3d of the light guide plate 3 are disposed along the four side portions 1a to 1d of the backlight frame 1, respectively. And, the side surface 3a of the light guide plate 3 which is disposed along the side portion 1a of the backlight case 1 functions as an light incident surface which introduces light generated by the LED 4 into the light guide plate 3. In the following description, the side surface 3a is called a light incident surface 3a.

Also, the light guide plate 3 includes a front surface 3e and a rear surface 3f. This front surface 3e of the light guide plate 3 functions as a light emission surface for emitting light introduced into the light guide plate 3 toward a frontward side (the liquid crystal display panel 20 side). In the following description, the front surface 3e is called a light emission surface 3e. By disposing such light guide plate 3, it becomes possible to make light generated by the LED 4 travel toward the frontward side (the liquid crystal display panel 20 side).

The plurality of LEDs 4 with the lens 4a are each so structured as to emit light via the lens 4a. Besides, the plurality of LEDs 4 are so arrayed away from each other by a predetermined distance in an A direction (a direction along the light incident surface 3a of the light guide plate 3) that each of them faces the light incident surface 3a of the light guide plate 3. In addition, the plurality of LEDs 4 are mounted on the same LED board 6. And, the LED board 6 on which the plurality of LEDs 4 are mounted is attached to the side portion 1a of the backlight frame 1 via a double-coated tape (not shown) or the like.

The plurality of optical sheets 5 include a diffusion sheet, a prism sheet and the like. Diffusion and the like of the light emitted through the light emission surface 3e of the light guide plate 3 are performed by the plurality of optical sheets 5.

Here, although not shown, a member that has a function to push the optical sheet 5 from a front side and other functions is disposed on the front side of the optical sheet 5. This member may be unitarily formed with the backlight frame 1 or may be attached to the backlight frame 1.

Here, in the first embodiment, as shown in Fig. 3, in the inside of the backlight frame 1, the plurality of LEDs 4 are not disposed in a region which faces an end portion 3g of the light incident surface 3a of the light guide plate 3 but disposed in a region which faces a portion other than the end portion 3g of the light incident surface 3a of the light guide plate 3. Here, a distance D from the center of the LED 4 of the plurality of LEDs 4 located at the : outermost end to the side surface 3b (3d) perpendicular to the light incident surface 3a of the light guide plate 3 is so set as to be larger than half of a pitch P between adjacent LEDs 4. For example, in a case where the pitch is about 15 mm, the distance D is so set as to be larger than about 7.5 mm.

And, in the first embodiment, in the inside of the backlight frame 1, a reflection surface that reflects light (the arrows L) emitted from the LED 4 to the light incident surface 3a of the light guide plate 3 is formed in the region which faces the end portion 3g of the light incident surface 3a of the light guide plate 3.

Specifically, in the first embodiment, in the inside of the backlight frame 1, a tapered surface 1f which is inclined in a straight-line fashion is unitarily formed on a corner portion (a predetermined portion which faces the end portion 3g of the light incident surface 3a of the light guide plate 3) which is constituted by the side portions 1a and 1b of the backlight frame 1. An angle between the tapered surface 1f of the backlight frame 1 and the light incident surface 3a of the light guide plate 3 is an acute angle when seen in a planar fashion. In other words, the tapered surface 1f of the backlight frame 1 is, when seen in a planar fashion, inclined by a predetermined angle to the light incident surface 3a of the light guide plate 3. Here, the tapered surface 1f of the backlight frame 1 is also formed on a corner portion (a predetermined portion which faces the end portion 3g of the light incident surface 3a of the light guide plate 3) which is constituted by the side portions 1a and 1d of the backlight frame 1. And, in the first embodiment, the above reflection surface is composed of the tapered surface 1f which is unitarily formed with the backlight frame 1.

In the first embodiment, as described above, by using the LED 4 with the lens 4a, it is possible to make light (LED light) emitted from the LED 4 travel in the A direction as well. Accordingly, even if the LED 4 is not disposed in the region which faces the end portion 3g of the light incident surface 3a of the light guide plate 3, it is possible to direct LED light to the region which faces the end portion 3g of the light incident surface 3a of the light guide plate 3. In this case, by forming the reflection surface (the tapered surface 1f) which reflects LED light to the light incident surface 3a of the light guide plate 3 in the region which faces the end portion 3g of the light incident surface 3a of the light guide plate 3, it is possible to make the LED light traveling in the A direction enter the end portion 3g of the light incident surface 3a of the light guide plate 3. Thus, even if the LED 4 is not disposed in the region which faces the end portion 3g of the light incident surface 3a of the light guide plate 3, it is possible to curb decrease in the light amount in the vicinity of the end portion of the light guide plate 3. Accordingly, even if cost reduction is attained by reducing the number of utilized LEDs 4 (eliminating the LED 4 disposed in the region which faces the end portion 3g of the light incident surface 3a of the light guide plate 3), it becomes possible to curb decrease in the light amount in the vicinity of the end portion of the light guide plate 3.

Besides, because the above reflection surface (the tapered surface 1f) is so structured as to reflect LED light to the light incident surface 3a of the light guide plate 3, it is possible to prevent multiple reflection of LED light from being repeated in the space between the light incident surface 3a of the light guide plate 3 and the LED 4 and to prevent the LED light from being absorbed by the backlight frame 1 and the LED 4 before the LED light enters the light incident surface 3a of the light guide plate 3. Accordingly, it is possible to improve the light utilization efficiency.

From these results, in the first embodiment, while attaining cost reduction, it is possible to curb decrease in the light amount in the vicinity of the end portion of the light guide plate 3 and improve the light utilization efficiency.

Besides, in the first embodiment, as described above, by composing the reflection surface which reflects LED light to the light incident surface 3a of the light guide plate 3 of the tapered surface 1f which is inclined by the predetermined angle to the light incident surface 3a of the light guide plate 3, it is possible to easily reflect the LED light which travels in the A direction to the light incident surface 3a of the light guide plate 3.

In addition, in the first embodiment, as described above, by not disposing the LED 4 in the region which faces the end portion 3g of the light incident surface 3a of the light guide plate 3 but by disposing the LED 4 in the region which faces the portion other than the end portion 3g of the light incident surface 3a of the light guide plate 3, it is possible to easily form the reflection surface (the tapered surface 1f) in the region which faces the end portion 3g of the light incident surface 3a of the light guide plate 3.

Besides, in the first embodiment, as described above, by forming the reflection surface (the tapered surface 1f) in each of the regions which face respectively the one and other end portions 3g of the light incident surface 3a of the light guide plate 3, it is possible to further reduce the number of utilized LEDs 4 compared with the case where the reflection surface (the tapered surface 1f) is formed in only the region which faces the one end portion 3g of the light incident surface 3a of the light guide plate 3.

In addition, in the first embodiment, as described above, by unitarily forming the reflection surface (the tapered surface 1f) with the backlight frame 1 which is formed of a white plastic, it is possible to curb increase in the number of components even if the reflection surface (the tapered surface 1f) is additionally formed.

Besides, in the structure in the first embodiment, in the case where the plurality of LEDs are disposed near the center, it is possible to increase the light amount near the center while securing the light amount in the vicinity of the end portion of the light guide plate 3.

### (Second Embodiment)

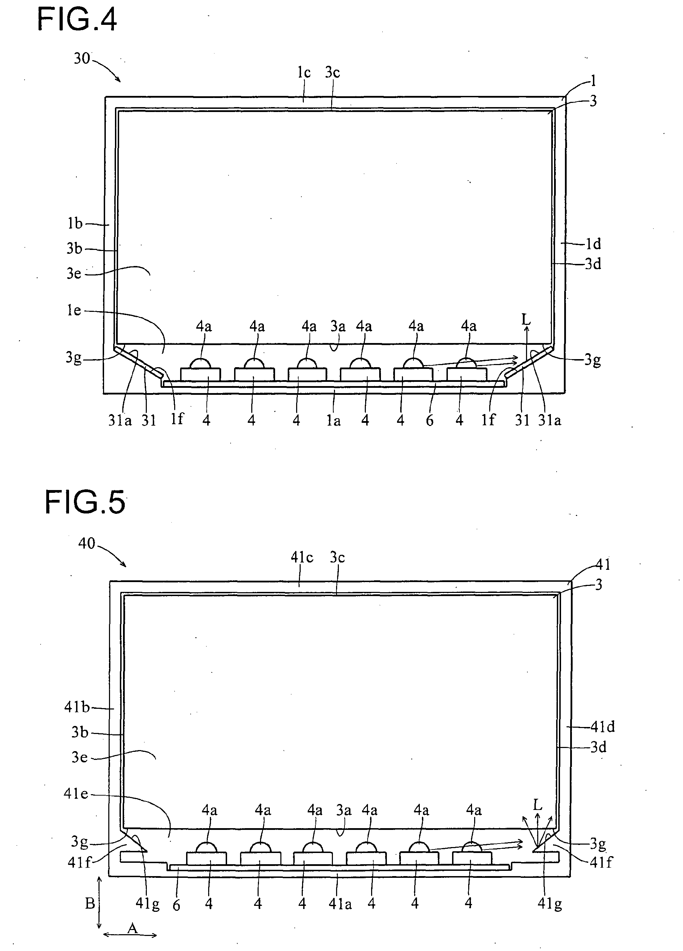

Next, a structure of a backlight unit according to a second embodiment is described with reference to Fig. 4. Here, an arrow L in Fig. 4 indicates a travel direction of light in the vicinity of an end portion of a light guide plate.

In a backlight unit 30 in this second embodiment, as shown in Fig. 4, in the structure of the backlight unit 10 in the first embodiment, a mirror member (an inorganic material) 31 is disposed on the tapered surface 1f of the backlight frame 1. In other words, in the second embodiment, in the inside of the backlight frame 1, the LED 4 is not disposed but the mirror member 31 is disposed in the region which faces the end portion 3g of the light incident surface 3a of the light guide plate 3. Here, the mirror member 31 in the second embodiment is a reflection sheet which is formed of silver or the like.

And, in the second embodiment, a reflection surface which reflects light emitted from the LED 4 to the light incident surface 3a of the light guide plate 3 is composed of a surface 31a of the mirror member 31. The surface 31a of this mirror member 31, when seen in a planar fashion, is inclined by a predetermined angle to the light incident surface 3a of the light guide plate 3. Here, the surface 31a of the mirror member 31 is inclined in a straight-line fashion with respect to the light incident surface 3a of the light guide plate 3. Besides, an angle between the surface 31a of the mirror member 31 and the light incident surface 3a of the light guide plate 3 is an acute angle when seen in a planar fashion.

Note that other structures of the backlight unit 30 in the second embodiment are the same as those of the backlight unit 10 in the above first embodiment.

In the second embodiment, as described above, by making the surface 31a of the mirror member (the reflection sheet formed of silver or the like) 31 function as the reflection surface, it is possible to improve the light incident efficiency to the light incident surface 3a of the light guide plate 3 compared with a case where a surface of a plastic which performs diffusive reflection is made function as a reflection surface. Further, because the mirror member (the reflection sheet formed of silver or the like) 31 does not easily deteriorate, it is possible to curb occurrence of a disadvantage that the surface 31a turns yellow. Accordingly, it is possible to curb occurrence of a disadvantage that the reflected light reflected by the reflection surface (the surface 31a of the mirror member 31) becomes yellowish.

Besides, in the second embodiment, as described above, by disposing the mirror member 31 on the tapered surface 1f of the backlight frame 1, it is possible to easily incline the reflection surface (the surface 31a of the mirror member 31) by the predetermined angle to the light incident surface 3a of the light guide plate 3.

Other advantages of the second embodiment are the same as those of the first embodiment.

### (Third Embodiment)

Next, a structure of a backlight unit according to a third embodiment is described with reference to Fig. 5. Here, arrows L in Fig. 5 indicate travel directions of light in the vicinity of an end portion of a light guide plate.

A backlight frame 41 of a backlight unit 40 in the third embodiment, as shown in Fig. 5, includes four side portions 41a to 41d which are so connected to each other into a frame shape as to enclose a housing region like the backlight frame 1 of the backlight unit 10 in the first embodiment. The side portions 41a to 41d of the backlight frame 41 correspond to the side portions 1a to 1d of the backlight frame 1 in the above first embodiment, respectively. Further, the backlight frame 41 in the third embodiment, like the backlight frame 1 in the first embodiment, includes a bottom portion 41e as well which is disposed on a rear side of the frame composed of the four side portions 41a to 41d. Here, the backlight frame 41 is an example of a "frame" in the present invention.

Here, in the third embodiment, a triangular-shape projecting portion 41f which projects toward inside is unitarily formed on each of the side portions 41b and 41d of the backlight frame 41. This projecting portion 41f of the backlight frame 41 is, in the inside of the backlight frame 41, disposed in the region which faces the end portion 3g of the light incident surface 3a of the light guide plate 3. In other words, in the third embodiment, in the inside of the backlight frame 41, the LED 4 is not disposed but the projecting portion 41f of the backlight frame 41 is disposed in the region which faces the end portion 3g of the light incident surface 3a of the light guide plate 3.

Besides, the projecting portion 41f of the backlight frame 41 so includes a tapered surface 41g that an angle formed between the tapered surface 41g and the light incident surface 3a of the light guide plate 3 is an acute angle when seen in a planar fashion. In other words, the tapered surface 41g of the projecting portion 41f of the backlight frame 41, when seen in a planar fashion, is inclined by a predetermined angle to the light incident surface 3a of the light guide plate 3. Here, the tapered surface 41g of the projecting portion 41f of the backlight frame 41 is inclined in a straight-line fashion with respect to the light incident surface 3a of the light guide plate 3. And, in the third embodiment, a reflection surface which reflects light emitted from the LED 4 to the light incident surface 3a of the light guide plate 3 is composed of the tapered surface 41g of the projecting portion 41f of the backlight frame 41.

Besides, in a B direction orthogonal to the A direction (the direction along the light incident surface 3a of the light guide plate 3), the position of a tip end (a vertex of the triangular-shape projecting portion 41f) of the tapered surface 41g of the projecting portion 41f of the backlight frame 41 matches with the position of a root portion of the lens 4a of the LED 4.

Note that other structures of the backlight unit 40 in the third embodiment are the same as those of the backlight unit 10 in the above first embodiment.

In the third embodiment, by employing the above structure, it is possible to obtain the same advantages as those in the first embodiment.

### (Fourth Embodiment)

Next, a structure of a backlight unit according to a fourth embodiment is described with reference to Fig. 6. Here, arrows L in Fig. 6 indicate travel directions of light in the vicinity of an end portion of a light guide plate.

A backlight frame 51 of a backlight unit 50 in the fourth embodiment, as shown in Fig. 6 includes four side portions 51a to 51d which are so connected to each other into a frame shape as to enclose a housing region like the backlight frame 1 of the backlight unit 10 in the first embodiment. The side portions 51a to 51d of the backlight frame 51 correspond to the side portions 1a to 1d of the backlight frame 1 in the above first embodiment, respectively. Further, the backlight frame 51 in the fourth embodiment, like the backlight frame 1 in the first embodiment, includes a bottom portion 51e as well which is disposed on a rear side of the frame composed of the four side portions 51a to 51d. Here, the backlight frame 51 is an example of a "frame" in the present invention.

Here, in the fourth embodiment, a reflection surface that reflects light emitted from the LED 4 to the light incident surface 3a of the light guide plate 3 is not unitarily formed with the backlight frame 51 but formed on an LED board 56 on which the LED 4 is mounted. Here, the LED board 56 is an example of a "board" in the present invention.

Specifically, in the fourth embodiment, a reflection member 57 which includes a triangular shape is mounted on a predetermined portion 56a of the LED board 56 which faces the end portion 3g of the light incident surface 3a of the light guide plate 3. In other words, in the fourth embodiment, in the inside of the backlight frame 51, the LED 4 is not disposed but the reflection member 57 is disposed in the region which faces the end portion 3g of the light incident surface 3a of the light guide plate 3. A resin, a metal or the like is able to be used as a material which forms this reflection member 57. Besides, although not shown, the reflection member 57 is screwed into the LED board 56.

Besides, the reflection member 57 so includes a tapered surface 57a that an angle formed between the tapered surface 57a and the light incident surface 3a of the light guide plate 3 is an acute angle when seen in a planar fashion. In other words, the tapered surface 57a of the reflection member 57, when seen in a planar fashion, is inclined by a predetermined angle to the light incident surface 3a of the light guide plate 3. Here, the tapered surface 57a of the reflection member 57 is inclined in a straight-line fashion with respect to the light incident surface 3a of the light guide plate 3. And, in the fourth embodiment, the above reflection surface is composed of the tapered surface 57a of the reflection member 57.

Note that other structures of the backlight unit 50 in the fourth embodiment are the same as those of the backlight unit 10 in the above first embodiment.

In the fourth embodiment, by employing the above structure, like the first embodiment, while attaining cost reduction, it is possible to curb decrease in the light amount in the vicinity of the end portion of the light guide plate 3 and improve the light utilization efficiency.

Note that it should be considered that the embodiments disclosed here are examples in all respects and not limitations. The scopes of the present invention are not indicated by the description of the above embodiments but indicated by the scopes of the claims and further all modifications are included in and within the meanings equivalent to the scopes of the claims.

For example, in the first to fourth embodiments, it is so structured that the reflection surface is inclined in a straight-line fashion with respect to the light incident surface of the light guide plate. However, the present invention is not limited to this, and at least part of the reflection surface may be a curved surface.

Besides, in the first to third embodiments, the tapered surface is unitarily formed with the backlight frame. However, the present invention is not limited to this, and a member which includes a tapered surface may be attached to the backlight frame.

In addition, in the third embodiment, the tapered surface of the projecting portion of the backlight frame is used as the reflection surface. However, the present invention is not limited to this, and a mirror member may be disposed on the tapered surface of the projecting portion of the backlight frame and a surface of the mirror member may be used as the reflection surface.

Besides, in the fourth embodiment, the reflection member which includes the tapered surface (the reflection surface) is attached to the LED board. However, the present invention is not limited to this, and the tapered surface (the reflection surface) may be unitarily formed with the LED board. For example, the tapered surface (the reflection surface) may be formed on an end portion of the LED board by folding the end portion of the LED board.

## Claims

1. A backlight unit comprising:
a frame;
a light guide plate which is disposed in an inside of the frame and a predetermined side surface of which serves as a light incident surface; and
a plurality of light emitting diodes which are disposed in the inside of the frame and are so arrayed away from each other by a predetermined distance as to face the light incident surface of the light guide plate;
wherein in a region that faces an end portion of the light incident surface of the light guide plate, the light emitting diodes are not disposed, and a reflection surface for reflecting light emitted from the light emitting diodes to the light incident surface of the light guide plate is formed.

2. The backlight unit according to claim 1, wherein the reflection surface is inclined by a predetermined angle to the light incident surface of the light guide plate.

3. The backlight unit according to claim 1, wherein the light emitting diodes are not disposed in the region that faces the end portion of the light incident surface of the light guide plate but disposed in a region that faces a portion other than the end portion of the light incident surface of the light guide plate.

4. The backlight unit according to claim 1, wherein a distance from the center of a light emitting diode of the plurality of light emitting diodes located at the outermost end to a side surface perpendicular to the light incident surface of the light guide plate is larger than half of a pitch between adjacent light emitting diodes.

5. The backlight unit according to claim 1, wherein the reflection surface is formed in both of a region that faces one end portion of the light incident surface of the light guide plate and a region that faces the other end portion opposite to the one end portion of the light incident surface of the light guide plate.

6. The backlight unit according to claim 1, wherein a tapered surface which is inclined by a predetermined angle to the incident light surface of the light guide plate is unitarily formed on the frame, and the reflection surface is composed of the tapered surface unitarily formed on the frame.

7. The backlight unit according to claim 6, wherein the frame is formed of a white plastic.

8. The backlight unit according to claim 1, wherein the reflection surface is composed of a surface of a mirror member.

9. The backlight unit according to claim 8, wherein a tapered surface which is inclined by a predetermined angle to the incident light surface of the light guide plate is formed in the region that faces the end portion of the light incident surface of the light guide plate, and the mirror member is disposed on the tapered surface.

10. The backlight unit according to claim 1, wherein the light emitting diodes are mounted on a board, and the reflection surface is formed on the board.

11. The backlight unit according to claim 1, wherein the light emitting diodes are each a light emitting diode with a lens.
